# EUROPÄISCHE PATENTANMELDUNG

(11) **EP 2 101 034 A2**
(43) Veröffentlichungstag der Anmeldung: **16.09.2009**
(21) Anmeldenummer: 09003470.3
(22) Anmeldetag: 10.03.2009
(51) Int. Cl.: E06B 9/174, E06B 9/50, H02K 5/16

(54) **Motorkopfbefestigung**

(30) Priorität: 11.03.2008 DE 102008013651
(71) Anmelder: Gerhard Geiger GmbH & Co., 74321 Bietigheim-Bissingen (DE)
(72) Erfinder: Dangel, Hans-Michael, 74391 Erligheim (DE)
(74) Vertreter: Jeck, Anton

(57) **Zusammenfassung**

Die Erfindung bezieht sich auf eine Befestigungsvorrichtung für einen Rollladen, eine Jalousie, eine Markise oder einen sonstigen Behang antreibenden Motor (1) mit einem Motorkopf (2), der in einer in einem Behangkasten integrierten Motorlagerplatte (5) aufgenommen ist. Der Motorkopf und die Motorlagerplatte sind mittels einer mit dem Motorkopf verbundenen, ringförmigen und zentral zur Motorachse liegenden Befestigungsfeder (4) durch deren Drehung um mindestens 5°, vorzugsweise 30°, miteinander verrastbar bzw. entrastbar.

## Beschreibung

Die Erfindung betrifft eine Befestigungsvorrichtung gemäß dem Oberbegriff des Anspruchs 1. Solche Befestigungsvorrichtungen werden vorzugsweise zwischen dem Motorkopf eines Rollladen-, Markisen-, Jalousienmotor oder ähnlichem und der dafür vorgesehenen Aufnahme in einem Rolladen-, Markisen- oder Jalousienkasten angebracht.

Eine derartige Befestigungsvorrichtung ist durch die EP 0 468 925 B1 und durch die DE 20 104 119 U bekannt. Die Befestigungsfeder ist bei den bekannten Befestigungsvorrichtungen nur mit erheblicher Kraftanstrengung und sehr umständlich zu montieren bzw. demontieren. Ferner ist von Nachteil, dass die dort verwendete Spannfeder beim Demontieren des Motors ein separates Teil bildet und so schnell verloren gehen kann. Damit eine leichte Montage vor Ort ermöglicht werden kann, ist es von Vorteil, wenn die Befestigungsfeder fest mit dem Motorkopf verbunden bleibt.

Die Aufgabe der Erfindung besteht darin, eine Befestigungsvorrichtung der im Oberbegriff des Anspruchs genannten Art zu schaffen, bei der die Befestigungsfeder ohne große Kraftanstrengung und in einfacher Weise montiert bzw. demontiert werden und nicht mehr verloren gehen kann.

Diese Aufgabe wird mit den Merkmalen des Anspruchs 1 gelöst.

Man erkennt, dass die Erfindung jedenfalls dann verwirklicht ist, wenn es sich um eine Befestigungsvorrichtung für einen Rolladen, eine Jalousie, eine Markise oder sonstigen Behang handelt, der in einer in einem Behangkasten integrierten Motoriagerplatte aufgenommen ist. Dabei sind der Motorkopf und die Motoriagerplatte mittels einer mit dem Motorkopf verbundenen ringförmigen und zentral zur Motorachse liegenden Befestigungsfeder durch deren Drehung um mindestens 5°, vorzugsweise 30° miteinander verrastbar bzw. entrastbar.

Die Verriegelung und Entriegelung des Motorkopfs an der Motorlagerplatte kann daher leicht durch eine geringfügige Drehung einer Befestigungsfeder erfolgen. Da die Befestigungsfeder mit dem Motorkopf auch nach der Entriegelung des Motorkopfs von der Motorlagerplatte verbunden bleibt, kann die Befestigungsfeder nun nicht mehr verloren gehen.

Eine einfache, weitere Ausbildung der Erfindung sieht vor, dass der Motorkopf in der Nähe seines Außenendes eine ringförmige Nut aufweist, in der die Befestigungsfeder drehbar gelagert ist, dass der Nutboden der Nut des Motorkopfs und das Endteil des Motorkopfs mehrere Einbuchtungen und die Motorlagerplatte darauf abgestimmte Vorsprünge mit seitlichen, außen liegenden Abflachungen aufweist und dass die Befestigungsfeder derart geformt ist, dass sie in einer Drehstellung in die Einbuchtungen eingreift und in einer anderen Drehstellung außer Kontakt mit den Einbuchtungen bringbar ist.

Eine weitere, praktische Ausbildung der Erfindung ist derart getroffen, dass der Nutboden im Wesentlichen in Form eines zur Motorachse zentral liegenden Vierecks ausgebildet ist, dass die Einbuchtungen an den vier Ecken des Vierecks vorgesehen sind, in die vier im Viereck angeordnete Vorsprünge passen, und dass die Befestigungsfeder im Wesentlichen in Form eines Vierecks ausgebildet ist und an ihren vier Ecken mit jeweils einem nach innen laufenden Bogen versehen ist, der in und außer Kontakt mit den Einbuchtungen bringbar ist.

Gemäß einer weiteren Ausbildung der Erfindung weist die Befestigungsfeder einen nach außen aus dem Motorkopf ragendem Griffteil auf, und sie ist gegenüber diesem Griffteil geöffnet. Die Befestigungsfeder wird dadurch elastischer und kann leichter zum Verriegeln und Entriegeln des Motorkopfs verdreht werden.

Die Erfindung wird nun anhand von Ausführungsbeispielen näher erläutert. Es zeigen:
- Fig. 1: eine perspektivische Ansicht eines Rohrmotorteils mit einem Motorkopf, in den eine Befestigungsfeder integriert ist, und einer Motorlagerplatte gemäß der Erfindung,
- Fig. 2: eine perspektivische Ansicht des Rohrmotorteils der Fig. 1 und einer weiteren Ausführung einer Motorlagerplatte gemäß der Erfindung,
- Fig. 3: einen Querschnitt durch den Motorkopf der Figuren 1 und 2 im Bereich der Befestigungsfeder, die geöffnet ist,
- Fig. 4: einen Querschnitt durch den Motorkopf der Figuren 1 und 2 im Bereich der Befestigungsfeder, die geschlossen ist,
- Fig. 5: eine perspektivische Ansicht der in den Figuren 3 und 4 gezeigten Befestigungsfeder.

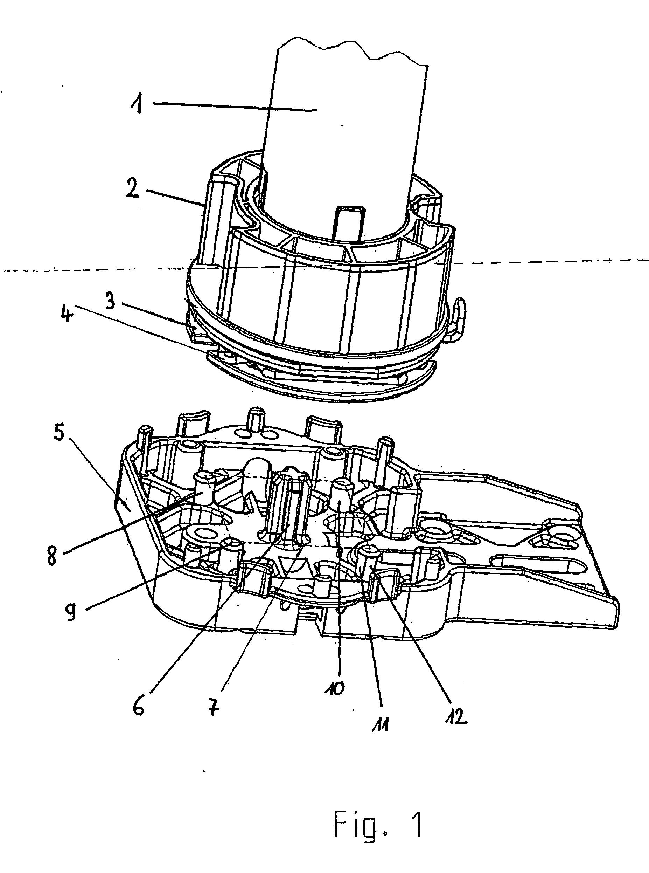

In Fig. 1 ist ein Teil 1 eines Rohrmotors dargestellt, wie er beispielsweise in einem Rollladenkasten zum Hochziehen und Absenken eines Rollladens verwendet wird.

Der Rohrmotorteil 1 ist an seinem Ende mit einem topfförmigen Motorkopf 2 zum Befestigen des Rohrmotors versehen. Der Motorkopf 2 weist in der Nähe seines Außenendes eine ringförmige Nut 3 auf, in der eine ringförmige Befestigungsfeder 4 zentral zur Achse des Rohrmotors drehbar gelagert ist.

Die Fig. 1 zeigt auch eine Motorlagerplatte 5, die beispielsweise in einem Rollladenkasten montiert wird. In diese Motorlagerplatte soll der Motorkopf 2 befestigt werden. Dazu trägt die Motorlagerplatte 5 einen zentralen Profildom 6 und vier im Viereck 7 angeodnete Vorsprünge 8-11 in Form von runden Stiften, die seitlich auf ihrer Außenseite jeweils mit Abflachungen, wie der Abflachung 12, versehen sind.

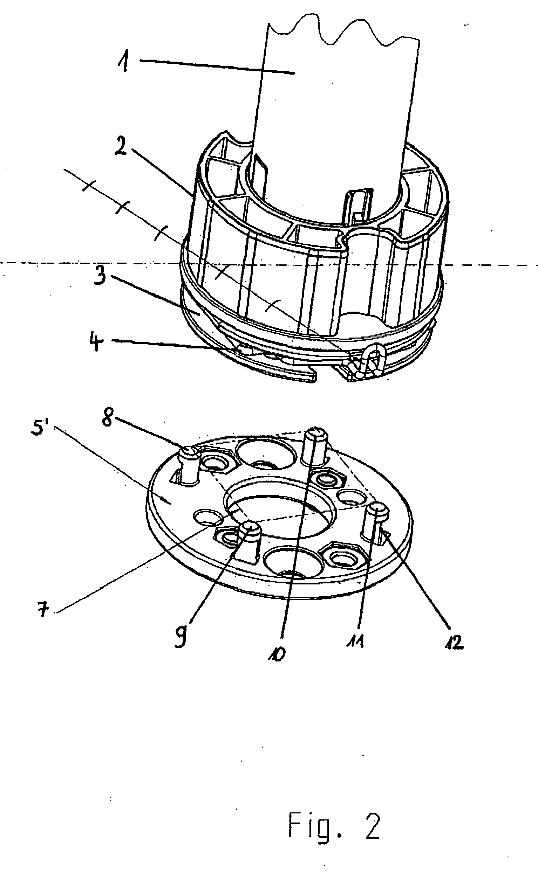

In Fig. 2 ist unter dem bereits in Fig. 1 dargestellten Rohrmotorteil 1 und Motorkopf 2 eine einfachere Ausführung einer Motorlagerplatte 5' dargestellt, die aber ebenfalls mit den vorbeschriebenen Vorsprüngen 8-11 ausgerüstet ist. Der Motorkopf 2 und die Motorlagerplatten 5, 5' können sowohl aus Kunststoff als auch aus Eisen- oder Nichteisenmetallen herstellbar sein.

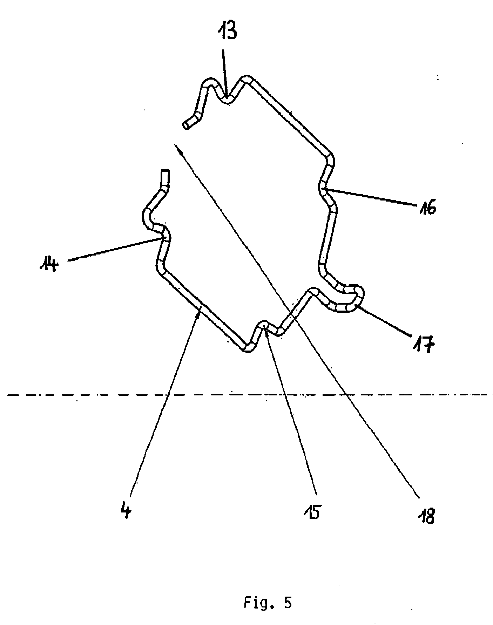

Die Form der in den Figuren 1 und 2 verwendeten Befestigungsfeder 4 ist in Fig. 5 dargestellt. Die Befestigungsfeder 5 hat eine ringförmige, im Wesentlichen viereckige Form und ist an ihren vier Ecken mit jeweils einem nach innen gerichteten Bogen 13-16 versehen. Sie weist auf einer Seite ferner ein Griffteil 17 und auf der dem Griffteil 17 gegenüberliegenden Seite eine Öffnung 18 auf.

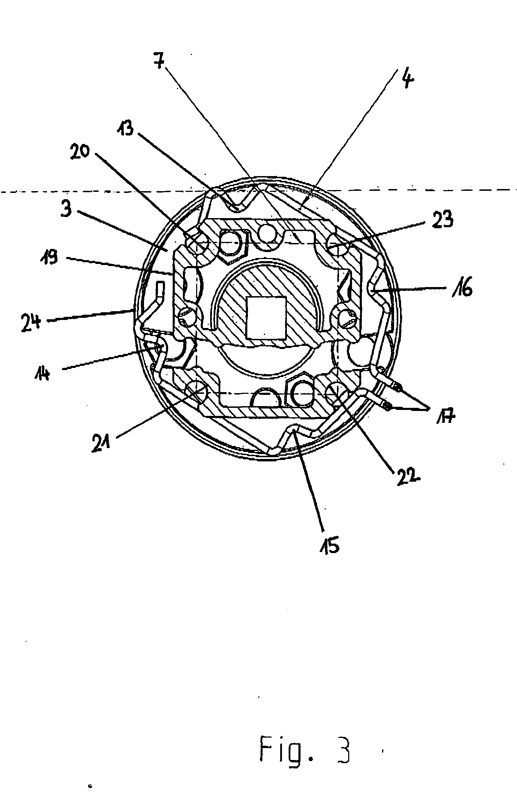

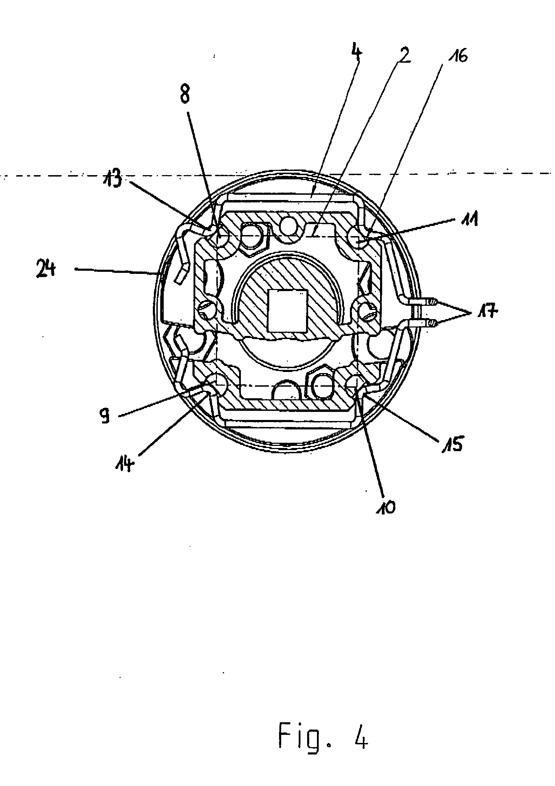

In den Figuren 3 und 4 sind nun Querschnitte durch den Motorkopf 2 im Bereich der Befestigungsfeder 4 dargestellt. Der Nutboden 19 der Nut 3 weist dabei eine im Wesentlichen viereckige, zentral zur Motorachse liegende Form auf. An den vier Ecken des Vierecks befinden sich runde Einbuchtungen 20-23, in die die Vorsprünge 8-11 passen. Die Einbuchtungen 20-23 setzen sich durch das durch die Nut 3 gebildete Endteil 24 des Motorkopfs 2 fort.

In Fig. 3 ist die Befestigungsfeder 4 nun am Griffteil 17 so gedreht, dass die Bögen 13-16 den Nutboden 19 nicht berühren. Daher kann der Motor mit seinem Motorkopf 2 aus der Motorlagerplatte 5 bzw. 5' abgezogen werden.

In Fig. 4 ist die Befestigungsfeder 4 andererseits am Griffteil 17 so gedreht, dass die Bögen 13-16 den Nutboden 19 berühren und sich in die Einbuchtungen 20-23 auf die Abflachungen (12) gelegt haben. Diese Drehung braucht nur geringfügig zu sein, beispielsweise 5°, kann aber vorzugsweise auch 30° betragen. Der Motorkopf ist damit in der Motorlagerplatte 5 bzw. 5' verriegelt.

### Bezugszeichenliste

- 1: Rohrmotorteil
- 2: Motorkopf
- 3: Nut
- 4: Befestigungsfeder
- 5,5': Motorlagerplatte
- 6: Profildom
- 7: Viereck
- 8-11: Vorsprung
- 12: Abflachung
- 13-16: Bogen
- 17: Griffteil
- 18: Öffnung
- 19: Nutboden
- 20-23: Einbuchtung
- 24: Endteil (des Motorkopfs)

## Patentansprüche

1. Befestigungsvorrichtung für einen Sonnenschutz, z. B. Rollladen, Jalousie, Markise oder einen sonstigen Behang, antreibenden Motor (1) mit einem Motorkopf (2), der in einer Motorlagerplatte (5, 5') aufgenommen ist,
**dadurch gekennzeichnet,**
**dass** der Motorkopf (2) und die Motorlagerplatte (5; 5') mittels einer mit dem Motorkopf verbundenen Befestigungsfeder (4) durch deren Drehung um mindestens 5°, vorzugsweise 30°, miteinander verrastbar bzw. entrastbar sind.

2. Befestigungsvorrichtung nach Anspruch 1,
**dadurch gekennzeichnet,**
**dass** der Motorkopf (2) in der Nähe seines Außenendes eine ringförmige Nut (3) aufweist, in der die Befestigungsfeder (4) drehbar gelagert ist, dass der Nutboden (19) der Nut des Motorkopfs und das Endteil (24) des Motorkopfs mehrere Einbuchtungen (20-24) und die Motorlagerplatte (5; 5') darauf abgestimmte Vorsprünge (8-11) mit seitlichen, außen liegenden Abflachungen (12) aufweist und dass die Befestigungsfeder (4) derart geformt ist, dass sie in einer Drehstellung in die Einbuchtungen (20-23) eingreift und in einer anderen Drehstellung außer Kontakt mit den Einbuchtungen (20-23) bringbar ist.

3. Befestigungsvorrichtung nach Anspruch 2,
**dadurch gekennzeichnet,**
**dass** der Nutboden (19) im Wesentlichen in Form eines zur Motorachse zentral liegenden Vierecks ausgebildet ist, dass die Einbuchtungen (20-23) an den vier Ecken des Vierecks vorgesehen sind, in die vier im Viereck (7) angeordnete Vorsprünge (8-11) passen, und dass die Befestigungsfeder (4) im Wesentlichen in Form eines Vierecks ausgebildet ist und an ihren vier Ecken mit jeweils einem nach innen laufenden Bogen (13-16) versehen ist, der in und außer Kontakt mit den Einbuchtungen (20-23) bringbar ist.

4. Befestigungsvorrichtung nach Anspruch 2 oder 3,
**dadurch gekennzeichnet,**
**dass** die Befestigungsfeder (4) einen nach außen aus dem Motorkopf (2) ragenden Griffteil (17) aufweist und gegenüber diesem geöffnet (18) ist.
